# EUROPÄISCHE PATENTSCHRIFT

(11) **EP 2 093 134 B1**
(45) Veröffentlichungstag und Bekanntmachung des Hinweises auf die Patenterteilung: **11.05.2011**
(21) Anmeldenummer: 09162092.2
(22) Anmeldetag: 21.03.2006
(51) Int. Cl.: B62D 53/08

(54) **Vorrichtung zum Nachweis und zur Anzeige der Position von Komponenten von Fahrzeugkupplungen**
Device for documenting and displaying the position of components of vehicle couplings
Dispositif de contrôle et d'affichage de la position de composants d'embrayages de véhicules

(30) Priorität: 24.03.2005 DE 102005014977
(43) Veröffentlichungstag der Anmeldung: 26.08.2009
(62) Teilanmeldung aus: 06723569.7
(73) Patentinhaber: Jost-Werke GmbH, 63263 Neu-Isenburg (DE)
(72) Erfinder: Schmidt, Dirk, 65559, Limburg (DE); Saupe, Swen, 55122, Mainz (DE); Strütt, Achim, 64560, Riedstadt (DE); Algüera, José Manuel Gallego, 63739, Aschaffenburg (DE)
(74) Vertreter: Fuchs

(56) Entgegenhaltungen:
- EP-A1- 0 823 343
- EP-A2- 0 388 848
- AT-B- 392 940
- DE-A1- 3 226 360
- DE-U1- 29 722 370

## Beschreibung

Die Erfindung betrifft eine Anordnung einer Vorrichtung zum Nachweis und zum Anzeigen der Position von Komponenten von Fahrzeugkupplungen aus einer Bolzenkupplung gemäß der im Oberbegriff des Anspruchs 1 stehenden Merkmale.

Aus der DE 102 41 904 A1 ist eine Vorrichtung zur Anzeige des Verschlusszustandes einer Sattelkupplung bekannt, wobei ein erster Sensor im Bereich der Aufnahmeöffnung der Sattelkupplung angeordnet ist und den Königszapfen detektiert und ein zweiter Sensor einen magnetempfindlichen Sensor umfasst, der mit einem an einem Bedienungshebel angebrachten Magneten zusammenwirkt, wobei beide Sensoren auf unterschiedliche Wirkmechanismen beruhen. Diese Sensoren sind an eine Anzeigeeinheit im Führerhaus der Sattelzugmaschine angeschlossen.

Die Signalübertragung sowie die Energieversorgung der Sensoren erfolgt im Regelfall über Kabelsätze und die Signalauswertung über entsprechende Steuerelektroniken. Der Installationsaufwand für solche Systeme ist groß und steht häufig in einem schlechten Verhältnis zum erzielten Effekt, was einer größeren Verbreitung dieser an sich wünschenswerten und der Sicherheit dienenden Ausstattung hinderlich entgegensteht.

Aus der US 6,736,420 B2 ist eine Verschiebevorrichtung für Sattelkupplungen bekannt, die zwei Führungsschienen mit Zahnleisten aufweist, auf denen ein Schlitten verschiebbar gelagert ist, der die Sattelkupplung trägt. Am Schlitten ist eine Verriegelungseinrichtung mit Blockierstücken angeordnet, die in die Zahnleisten eingreifen. Eines der Blockierstücke ist mit einem Öffnungshebel verbunden, der wiederum mit einer Betätigungseinrichtung, z. B. einem Zuggriffhebel zur manuellen Betätigung verbunden sein kann. Auch bei dieser bekannten Verschiebevorrichtung ist es notwendig, dass der Fahrer die ordnungsgemäße Verriegelung des Schlittens visuell kontrolliert bevor er losfährt.

Unabhängig von dem Vorhandensein von Anzeigeeinrichtungen im Fahrerhaus muss der Fahrer vor Beginn der Fahrt eine visuelle Überprüfung des Fahrzeugs, der Sattelkupplung, der Verschlusseinrichtung etc. durchführen.

In der Regel werden mechanische Verschlussanzeigen verwendet, die je nach Ausführung und Lichtverhältnissen besser oder schlechter erkannt werden können. Dies kann den Fahrzeugcheck vor Antritt der Fahrt deutlich erschweren und im Extremfall sogar zu fehlerhaftem Kuppeln führen.

Die AT 392 940 B beschreibt eine Anhängerkupplung mit einem Kupplungsgehäuse, welches eine Betätigungs- und Sicherungsvorrichtung zum Verstellen und Verriegeln eines verschiebbar geführten Kupplungsbolzens aufnimmt. Dabei umfasst die Betätigungs- und Sicherungsvorrichtung einen aus dem Kupplungsgehäuse ausfahrbaren Anzeigestift zum Anzeigen der Kupplungs- und Verriegelungsstellung, der einen Schalter einer ihm zugeordneten elektrischen Licht- und/oder Tonsignaleinrichtung betätigt. Hierfür ist der Anzeigestift verschiebbar gelagert und weist an seinem ins Gehäuseinnere ragenden Ende eine Keil- oder Kegelfläche auf, die mit einer benachbarten Lasche der Verriegelungsmechanik zusammenwirkt. Der wesentliche Nachteil dieser bekannten Anhängerkupplung liegt an dem störanfälligen Zusammenspiel des Kupplungsbolzens mit Laschen der Verriegelungsmechanik und deren Ansteuerung der Tonsignaleinrichtung. Insbesondere bei verschlissenen Komponenten der Verriegelungsmechanik ist eine zuverlässige visuelle oder akustische Anzeige des Verschlusszustandes kaum möglich.

Es ist daher Aufgabe der Erfindung, eine Anordnung einer Vorrichtung zum Nachweisen und zum Anzeigen der Position von Komponenten von Kupplungen an einer Bolzenkupplung bereitzustellen, die eine visuelle und zuverlässige Überprüfung dieser Komponenten erleichtert.

Diese Aufgabe wird mit einer Vorrichtung gemäß der im kennzeichnenden Teil des Anspruchs 1 stehenden Merkmale gelöst.

Der Vorteil der Vorrichtung besteht darin, dass ein kompaktes Gerät zur Verfügung gestellt wird, das am Ort der Überprüfung platziert werden kann und dort auch ein vorzugsweise optisches oder akustisches Signal abgibt. Eine aufwendige Verkabelung der Sensoreinheit mit einer im Fahrerhaus angeordneten Anzeigeeinrichtung entfällt. Es wird daher ein kostengünstiges Gerät zur Verfügung gestellt, das an den Stellen problemlos angeordnet werden kann, wo eine Überprüfung durchgeführt werden soll. Die visuelle Überprüfung kann durch den Fahrer im Vorbeigehen erfolgen, ohne dass er zusätzliche Hilfsmittel, wie z. B. Taschenlampen etc. benötigt, um beispielsweise den Verschlusszustand einer Sattelkupplung oder die Position einer Verschiebeeinrichtung zu überprüfen.

Die kombinierte Sensor- und Anzeigeeinheit weist eine eigene Spannungsquelle auf, die im Gehäuse angeordnet ist. Diese Maßnahme trägt ebenfalls zur universellen Einsetzbarkeit der erfindungsgemäßen Vorrichtung bei. Eine Verkabelung zur Stromversorgung entfällt. Als Spannungsquelle können Batterien, Akkus oder z. B. elektrokinematische Generatoren verwendet werden.

Vorzugsweise weist die kombinierte Sensor- und Anzeigeeinheit eine elektronische Auswerteeinheit auf. Mit dieser Auswerteeinheit kann nicht nur das Sensorsignal dahingehend ausgewertet werden, ob ein Verschlusszustand vorliegt oder nicht (Ja/Nein-Signal), sondern eine solche Auswerteeinheit ermöglicht es auch, den Zustand der Energieversorgung (z. B. Akku oder Batterie) auszuwerten. Vorzugsweise kann die Vorrichtung auch mindestens einen Abstandssensor aufweisen.

Als Sensoren können induktive Sensoren, Magnetsensoren, Kraftsensoren, Drucksensoren oder Reedsensoren in Betracht kommen. Vorzugsweise arbeiten die Sensoren berührungslos, wobei elektromagnetische Sensoren bevorzugt sind.

Je nach Einsatzort kann der Sensor auch ein Schaltelement, insbesondere ein mechanisches Schaltelement, aufweisen. Eine derartige Ausführung ist beispielsweise zweckmäßig beim Einsatz der erfindungsgemäßen Vorrichtung an Bolzenkupplungen.

Die Anzeigeeinheit weist vorzugsweise ein am Gehäuse angeordnetes optisches Anzeigeelement auf. Dies kann z. B. eine Lampe, insbesondere eine LED-Anzeige sein. Hierbei ist es bevorzugt, wenn dieses optische Anzeigeelement derart am Gehäuse angeordnet ist, dass es entsprechend der Position der Vorrichtung am Fahrzeug beim Vorgehen des Fahrers von diesem problemlos wahrgenommen werden kann.

Die Anzeigeeinheit kann ausschließlich oder zusätzlich ein akustisches Anzeigeelement und/oder ein mechanisches Anzeigeelement aufweisen. Als mechanische Anzeigeelemente kommen Winker, Stifte oder ähnliches in Frage. Bei den akustischen Anzeigeelementen sind Piepser oder Summer bevorzugt. Die Anzeige am Anzeigeelement kann permanent erfolgen, beispielsweise durch ein Dauerlicht oder Dauerton. Die Anzeige kann aber auch nicht permanent ausgelegt sein und z. B. in Form eines Blinklichtes oder dergleichen.

Die erfindungsgemäße Vorrichtung ist an der Außenseite einer Bolzenkupplung benachbart zum Kupplungsbolzen angeordnet, der in Schließstellung mit dem Sensor der Sensoreinheit zusammenwirkt.

Der Sensor weist bei dieser Ausführung ein Schaltelement auf, das vom Kupplungsbolzen betätigbar ist. Dieses Schaltelement ist mit der Sensoreinheit in der Weise verknüpft, dass aus der Position des Schaltelementes auf den Verschlusszustand der Bolzenkupplung geschlossen werden kann.

Beispielhafte Ausführungsformen der Erfindung werden nachfolgend anhand der Zeichnungen näher erläutert. Es zeigen:
- Figur 1: eine schematische Darstellung der erfindungsgemäßen Vorrichtung,
- Figur 2: die Anordnung der Vorrichtung an einer Bolzenkupplung,
- Fign. 3a+3b: eine vergrößerte schematische Darstellung der Vorrichtung an einer Bolzenkupplung.

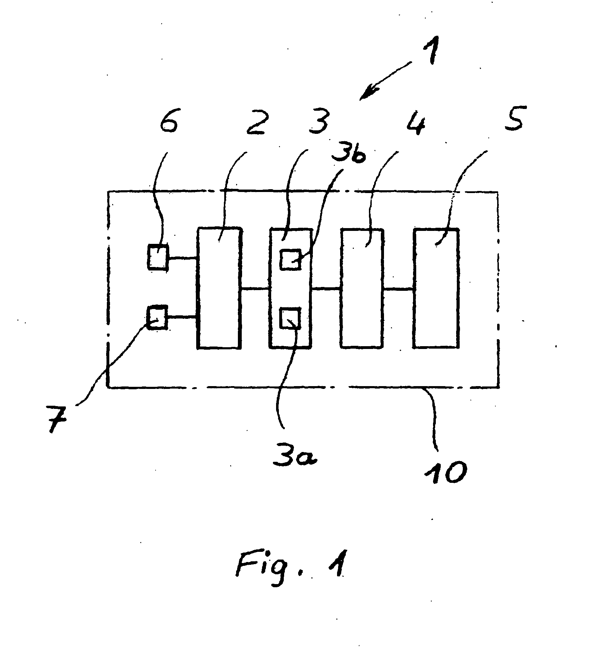

In der Figur 1 ist die erfindungsgemäße Vorrichtung 1 schematisch dargestellt. In einem gestrichelt dargestellten Gehäuse 10 sind eine Sensoreinheit 3 mit Sensoren 3a, 3b eine Anzeigeeinheit 2, eine Auswerteeinheit 4, eine Spannungsquelle 5 und Anzeigeelemente 6 und 7 untergebracht, die mit der Anzeigeeinheit 2 verbunden sind. Alle Einheiten sind an die Spannungsquelle 5 angeschlossen und teilweise auch miteinander verbunden, was nur schematisch in der Figur 1 dargestellt ist. Die dargestellte Vorrichtung 1 enthält sowohl ein akustisches Anzeigeelement 6 als auch ein optisches Anzeigeelement 7.

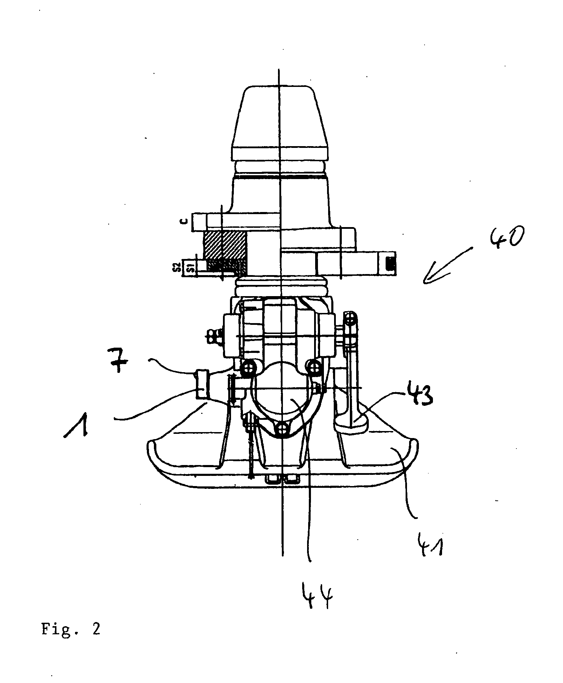

In der Figur 2 ist eine Bolzenkupplung 40 dargestellt, die ein Kupplungsgehäuse 41 aufweist, in das das vordere Ende beispielsweise einer Deichsel eingeführt werden kann. Im Gehäuse befindet sich eine Öffnung für den Kupplungsbolzen 44, der in senkrechter Richtung verschoben werden kann. Hierzu ist der Hebel 43 vorgesehen.

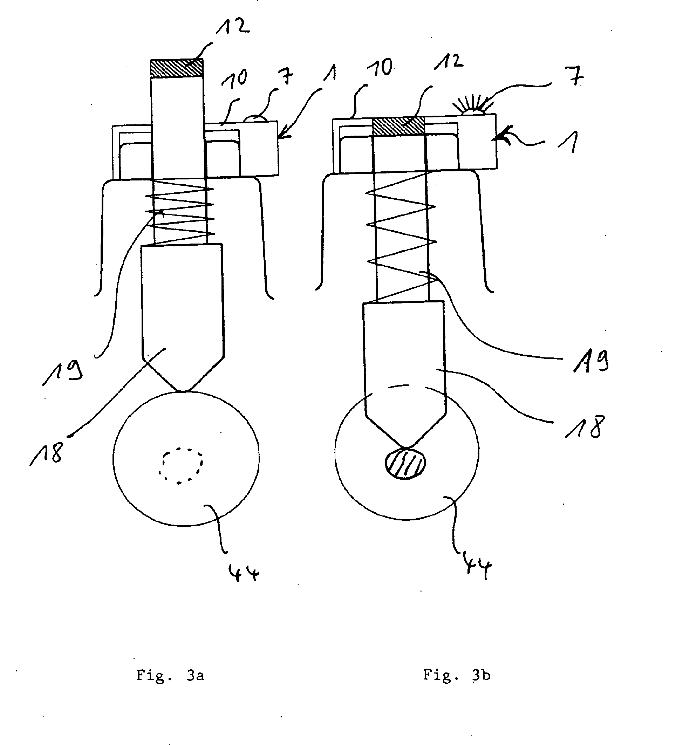

An der linken Seite des Kupplungsgehäuses 41 ist die erfindungsgemäße Vorrichtung 1 mit dem Anzeigeelement 7 angeordnet. Die Funktionsweise wird in den Figuren 3a und 3b dargestellt.

Die Vorrichtung 1 besitzt ein mechanisches Schaltelement in Form eines Sicherungsbolzens 18 mit dem Kontaktelement 12 an seinem freien Ende, der federgelagert am Gehäuse 1 angeordnet ist und sich durch das Gehäuse 10 nach außen erstreckt. Figur 3a zeigt die geöffnete Stellung des Kupplungsbolzens 44. Figur 3b zeigt die geschlossene Stellung, in der der Kupplungsbolzen 44 relativ zum Sicherungsbolzen 18 verschoben steht, so dass der Sicherungsbolzen 18, angetrieben durch die Druckfeder 19, in eine Vertiefung im Kupplungsbolzen 44 eintaucht. Außer anhand des optischen Anzeigeelements 7 ist auch anhand der Position des Sicherungsbolzens 18 die jeweilige Stellung erkennbar, wie ein Vergleich der Figuren 3a und 3b zeigt. Es ist dadurch möglich, die Verriegelungsposition des Kupplungsbolzens 44 zu detektieren.

### Bezugszeichenliste

- 1: Vorrichtung
- 2: Anzeigeeinheit
- 3: Sensoreinheit
- 3a: Sensor
- 3b: Sensor (Abstandssensor)
- 4: Auswerteeinheit
- 5: Spannungsquelle
- 6: akustisches Anzeigeelement
- 7: optisches Anzeigeelement

- 10: Gehäuse
- 12: Kontaktelement
- 18: Sicherungsbolzen
- 19: Druckfeder

- 40: Bolzenkupplung
- 41: Kupplungsgehäuse
- 43: Sicherungshebel
- 44: Kupplungsbolzen

## Patentansprüche

1. Anordnung einer Vorrichtung (1, 1') zum Nachweis und zum Anzeigen der Position von Komponenten von Fahrzeugkupplungen an einer Bolzenkupplung (40), wobei die Vorrichtung (1, 1') mindestens einen Sensor (3a, 3b) und mindestens ein Anzeigeelement (6, 7) sowie eine eigene Spannungsquelle (5) umfasst, wobei der mindestens eine Sensor (3a, 3b), das mindestens eine Anzeigeelement (6, 7) und die Spannungsquelle (5) in einem gemeinsamen Gehäuse (10) einer kombinierten Sensor- und Anzeigeeinheit (2, 3) angeordnet sind, welche an der Außenseite einer Bolzenkupplung (40) benachbart zu einem Kupplungsbolzen (44) angeordnet ist, wobei der Kupplungsbolzen (44) in Schließstellung mit dem Sensor (3a) der Sensoreinheit (3) zusammenwirkt und der Sensor (3a) ein Schaltelement in Form eines Sicherungsbolzens (18) aufweist,
**dadurch gekennzeichnet,**
**dass** der Sicherungsbolzen (18) unmittelbar von dem Kupplungsbolzen (44) betätigt ist.

2. Anordnung nach Anspruch 1, **dadurch gekennzeichnet, dass** die kombinierte Sensor- und Anzeigeeinheit (2, 3) eine elektronische Auswerteeinheit (4) aufweist.

3. Anordnung nach Anspruch 1 oder 2, **dadurch gekennzeichnet, dass** mindestens ein Abstandssensor (3b) vorgesehen ist.

4. Anordnung nach einem der Ansprüche 1 bis 3, **dadurch gekennzeichnet, dass** der Sensor (3a, 3b, 3c) berührungslos arbeitet.

5. Anordnung nach einem der Ansprüche 1 bis 4, **dadurch gekennzeichnet, dass** der Sensor (3a, 3b, 3c) ein elektromagnetischer Sensor ist.

6. Anordnung nach einem der Ansprüche 1 bis 5, **dadurch gekennzeichnet, dass** die Anzeigeeinheit (2) ein am Gehäuse (10) angeordnetes optisches Anzeigeelement (7) aufweist.

7. Anordnung nach einem der Ansprüche 1 bis 6, **dadurch gekennzeichnet, dass** die Anzeigeeinheit (2) ein akustisches Anzeigeelement (6) aufweist.

8. Anordnung nach einem der Ansprüche 1 bis 7, **dadurch gekennzeichnet, dass** die Anzeigeeinheit (2) ein mechanisches Anzeigeelement aufweist.

## Claims

1. Arrangement of an apparatus (1, 1') for detecting and indicating the position of components of vehicle couplings on a bolt coupling (40), the apparatus (1, 1') comprising at least one sensor (3a, 3b) and at least one indicator member (6, 7) and also its own voltage source (5), the at least one sensor (3a, 3b), the at least one indicator member (6, 7) and the voltage source (5) being arranged in a common housing (10) of a combined sensor and indicator unit (2, 3) which is arranged on the outside of a bolt coupling (40), adjacent to a coupling bolt (44), the coupling bolt (44) cooperating in the closed position with the sensor (3a) of the sensor unit (3) and the sensor (3a) having a switching member in the form of a securing bolt (18),
**characterised in that**
the securing bolt (18) is operated directly by the coupling bolt (44).

2. Arrangement according to claim 1, **characterised in that** the combined sensor and indicator unit (2, 3) has an electronic evaluation unit (4).

3. Arrangement according to claim 1 or 2, **characterised in that** at least one distance sensor (3b) is provided.

4. Arrangement according to any one of claims 1 to 3, **characterised in that** the sensor (3a, 3b, 3c) operates in a contactless manner.

5. Arrangement according to any one of claims 1 to 4, **characterised in that** the sensor (3a, 3b, 3c) is an electromagnetic sensor.

6. Arrangement according to any one of claims 1 to 5, **characterised in that** the indicator unit (2) has an optical indicator member (7) arranged on the housing (10).

7. Arrangement according to any one of claims 1 to 6, **characterised in that** the indicator unit (2) has an acoustic indicator member (6).

8. Arrangement according to any one of claims 1 to 7, **characterised in that** the indicator unit (2) has a mechanical indicator member.

## Revendications

1. Agencement d'un dispositif (1, 1') de détection et d'indication de la position d'éléments d'attelages de véhicules sur un attelage à boulon (40), sachant que le dispositif (1, 1') comprend au moins un capteur (3a, 3b) et au moins un élément indicateur (6, 7) ainsi qu'une propre source d'alimentation électrique (5), sachant que le capteur au moins unique (3a, 3b), l'élément indicateur au moins unique (6, 7) et la source d'alimentation électrique (5) sont disposés dans un boîtier commun (10) d'une unité combinée (2, 3) de détection et d'indication qui est disposée sur le côté extérieur d'un attelage à boulon (40) au voisinage d'un boulon d'attelage (44), sachant que le boulon d'attelage (44) coopère en position fermée avec le capteur (3a) de l'unité de détection (3) et que le capteur (3a) présente un élément de commutation sous la forme d'une goupille de sécurité (18),
**caractérisé en ce que** la goupille de sécurité (18) est directement actionnée par le boulon d'attelage (44).

2. Agencement selon la revendication 1, **caractérisé en ce que** l'unité combinée (2, 3) de détection et d'indication présente une unité d'interprétation électronique (4).

3. Agencement selon la revendication 1 ou 2, **caractérisé en ce qu'**il est prévu au moins un capteur de distance (3b).

4. Agencement selon l'une des revendications 1 à 3, **caractérisé en ce que** le capteur (3a, 3b, 3c) fonctionne sans contact.

5. Agencement selon l'une des revendications 1 à 4, **caractérisé en ce que** le capteur (3a, 3b, 3c) est un capteur électromagnétique.

6. Agencement selon l'une des revendications 1 à 5, **caractérisé en ce que** l'unité d'indication (2) présente un élément d'indication optique (7) disposé sur le boîtier (10).

7. Agencement selon l'une des revendications 1 à 6, **caractérisé en ce que** l'unité d'indication (2) présente un élément d'indication acoustique (6).

8. Agencement selon l'une des revendications 1 à 7, **caractérisé en ce que** l'unité d'indication (2) présente un élément d'indication mécanique.
